# EUROPEAN PATENT APPLICATION

(11) **EP 4 579 435 A1**
(43) Date of publication of application: **02.07.2025**
(21) Application number: 24212598.7
(22) Date of filing: 13.11.2024
(51) Int. Cl.: G06F 3/16, G06F 3/0481

(54) **DISPLAY CONTROL METHOD AND APPARATUS, VEHICLE, TERMINAL, AND STORAGE MEDIUM**

(30) Priority: 28.12.2023 CN 202311866882
(71) Applicant: Xiaomi Technology (Wuhan) Co., Ltd., Wuhan, Hubei 430000 (CN); Beijing Xiaomi Mobile Software Co., Ltd., Beijing 100085 (CN); Beijing Xiaomi Pinecone Electronics Co., Ltd., Beijing 100085 (CN)
(72) Inventor: LIU, Qiangjin, Wuhan, Hubei, 430000 (CN)
(74) Representative: Stöckeler, Ferdinand

(57) **Abstract**

The invention relates to a display control method and apparatus, a vehicle, a terminal, and a storage medium. The vehicle recognizes (S101), in response to obtaining a speech input message, a control instruction corresponding to the speech input message. If the control instruction instructs the terminal to display a target application in a preset display mode to an on-board computer of the vehicle, a display parameter corresponding to the preset display mode is sent (S102) to the terminal. The terminal is connected to the vehicle via a network, the target application is installed on the terminal, and the target application is not installed on the on-board computer. Interface rendering data generated by the terminal according to the display parameter is received (S103), and an interface of the target application is displayed (S103) on a screen of the on-board computer in the preset display mode according to the interface rendering data.

## Description

### TECHNICAL FIELD

The invention relates to the field of vehicle control, in particular to a display control method and apparatus, a vehicle, a terminal, and a storage medium.

### BACKGROUND OF THE INVENTION

There may be scenarios where a user needs to operate the user's smart device (e.g., a mobile phone/ipad) while driving. For example, the user wants to open a certain application on the mobile phone, etc. However, operating the mobile phone/ipad while driving is a dangerous driving behavior.

### SUMMARY OF THE INVENTION

To solve problems in related art, the invention provides a display control method and apparatus, a vehicle, a terminal, and a storage medium.

According to a first aspect of examples of the invention, a display control method is provided and applied to a vehicle and includes: recognizing, in response to obtaining a speech input message, a control instruction corresponding to the speech input message; sending, in response to the control instruction instructing a terminal to display a target application in a preset display mode to an on-board computer of the vehicle, a display parameter corresponding to the preset display mode to the terminal, where the terminal is connected to the vehicle via a network, the target application is installed on the terminal, and the target application is not installed on the on-board computer; and receiving interface rendering data generated by the terminal according to the display parameter, and displaying an interface of the target application on a screen of the on-board computer in the preset display mode according to the interface rendering data.

Optionally, the preset display mode includes a first mode for a full screen display on the screen of the on-board computer, or a second mode for a display in a preset area of the screen of the on-board computer, and different preset display modes correspond to different display parameters.

Optionally, in the case where the preset display mode includes the second mode, displaying the interface of the target application in the preset area of the screen of the on-board computer according to the interface rendering data, displaying a first preset interface in other areas of the screen of the on-board computer, wherein the first preset interface includes a black screen or an application icon of the on-board computer, and the other areas are areas on the screen of the on-board computer other than the preset area.

Optionally, the method further includes: sending, in response to receiving a trigger operation of a user to the interface of the target application displayed on the screen of the on-board computer, a screen trigger event corresponding to the trigger operation to the terminal; receiving interface response data sent by the terminal according to the screen trigger event; and responding to the trigger operation on the screen of the on-board computer according to the interface response data.

Optionally, recognizing the control instruction corresponding to the speech input message includes: sending the speech input message to a server to enable the server to determine the control instruction by performing semantic recognition on the speech input message; and receiving the control instruction sent by the server.

Optionally, recognizing the control instruction corresponding to the speech input message includes: determining the control instruction corresponding to the speech input message through a preset instruction correspondence.

Optionally, recognizing the control instruction corresponding to the speech input message includes: outputting, by inputting the speech input message into a pre-trained instruction recognition macromodel, the control instruction through the instruction recognition macromodel.

Optionally, the control instruction includes a control instruction instructing the terminal to open the target application. The method further includes: sending the control instruction to the terminal to enable the terminal to open the target application after executing the control instruction.

Optionally, the method further includes: controlling, after the terminal opens the target application, the interface of the target application to be displayed on the screen of the on-board computer in the preset display mode.

According to a second aspect of the examples of the invention, a display control method is provided and applied to a terminal and includes: receiving a display parameter corresponding to a preset display mode sent by a vehicle, where the display parameter is sent in a case that the vehicle determines that a control instruction corresponding to a speech input message instructs the terminal to display a target application in the preset display mode to an on-board computer of the vehicle, the terminal is connected to the vehicle via a network, the target application is installed on the terminal, and the target application is not installed on the on-board computer; generating interface rendering data through the target application according to the display parameter; and sending the interface rendering data to the vehicle to enable the vehicle to display an interface of the target application on a screen of the on-board computer in the preset display mode according to the interface rendering data.

Optionally, generating the interface rendering data through the target application according to the display parameter includes: generating the interface rendering data by performing a user interface (UI) design on the screen of the on-board computer through the target application according to the display parameter; where different preset display modes correspond to different display parameters.

Optionally, the display parameter includes a resolution and size of the screen of the on-board computer. The interface rendering data includes a position and size of each UI element in the interface of the target application on the screen of the on-board computer. Generating the interface rendering data by performing the UI design on the screen of the on-board computer through the target application according to the display parameter includes: determining, according to the resolution and the size, the position and the size of each UI element in the interface of the target application on the screen of the on-board computer.

Optionally, the method further includes: receiving a screen trigger event sent by the vehicle, where the screen trigger event is a screen trigger event generated by the vehicle according to a trigger operation of a user to the interface of the target application displayed on the screen of the on-board computer; generating interface response data by re-performing a UI design on the screen of the on-board computer according to the screen trigger event; and sending the interface response data to the vehicle to enable the vehicle to respond to the trigger operation on the screen of the on-board computer according to the interface response data.

Optionally, the method further includes: controlling, in a case where a terminal interface currently displayed by the terminal is the interface of the target application, the currently displayed interface of the terminal to be switched to a second preset interface; or, controlling, in a case where a terminal interface currently displayed by the terminal is not the interface of the target application, the terminal to maintain the currently displayed interface.

Optionally, the method further includes: setting the target application as a foreground application of the terminal or locking the target application in a background.

Optionally, the method further includes: receiving the control instruction sent by the vehicle; controlling, according to the control instruction, the terminal to open the target application; and controlling, after the terminal opens the target application, the interface of the target application to be displayed on the screen of the on-board computer in the preset display mode.

According to a third aspect of the examples of the invention, a display control apparatus is provided and applied to a vehicle and includes: a message recognizing module, configured to recognize, in response to obtaining a speech input message, a control instruction corresponding to the speech input message; a first sending module, configured to send, in response to the control instruction instructing a terminal to display a target application in a preset display mode to an on-board computer of the vehicle, a display parameter corresponding to the preset display mode to the terminal, where the terminal is connected to the vehicle via a network, the target application is installed on the terminal, and the target application is not installed on the on-board computer; and a display module, configured to receive interface rendering data generated by the terminal according to the display parameter, and display an interface of the target application on a screen of the on-board computer in the preset display mode according to the interface rendering data.

According to a fourth aspect of the examples of the invention, a display control apparatus is provided and applied to a terminal and includes: a first receiving module, configured to receive a display parameter corresponding to a preset display mode sent by a vehicle, where the display parameter is sent in a case that the vehicle determines that a control instruction corresponding to a speech input message instructs the terminal to display a target application in the preset display mode to an on-board computer of the vehicle, the terminal is connected to the vehicle via a network, the target application is installed on the terminal, and the target application is not installed on the on-board computer; a rendering data generating module, configured to generate interface rendering data through the target application according to the display parameter; and a second sending module, configured to send the interface rendering data to the vehicle to enable the vehicle to display an interface of the target application on a screen of the on-board computer in the preset display mode according to the interface rendering data.

According to a fifth aspect of the examples of the invention, a vehicle is provided and includes: a processor; and a memory configured to store processor-executable instructions; where the processor is configured to execute steps of the method according to the first aspect of the invention.

According to a sixth aspect of the examples of the invention, a terminal is provided and includes: a processor; and a memory configured to store processor-executable instructions; where the processor is configured to execute steps of the method according to the second aspect of the invention.

According to a seventh aspect of the examples of the invention, a computer readable storage medium is provided, storing computer program instructions, and the program instructions, when executed by a processor, implement steps of the display control method provided in the first aspect or second aspect of the invention.

A technical solution provided by the examples of the invention may provide the following beneficial effects. The control instruction corresponding to the speech input message may be recognized after the vehicle receives the speech input message sent by the user, and in the case of determining that the control instruction instructs the terminal to display the target application in the preset display mode to the on-board computer of the vehicle, the interface rendering data generated by the terminal according to the display parameter is received by sending the display parameter corresponding to the preset display mode to the terminal. In this way, the vehicle may display the interface of the target application installed on the terminal in the preset display mode on the screen of the on-board computer according to the interface rendering data, and the interface of the target application displayed in the preset display mode (e.g., the full screen display or the display in the preset area of the screen of the on-board computer) is adapted to the screen of the on-board computer, which avoids merely being able to project the interface of the target application installed on the terminal to the screen of the on-board computer in a mirror mode and improves user experience. In addition, the user may realize that the interface of the target application installed on the terminal is displayed on the screen of the on-board computer through the speech input message, avoiding a manual operation to the screen of the terminal, and improving the safety of vehicle driving.

It is to be understood that above general descriptions and detailed descriptions hereinafter are merely examples and illustrative, and do not limit the invention.

### BRIEF DESCRIPTION OF DRAWINGS

Accompanying drawings are incorporated into the specification, and constitute a part of the specification, which illustrate examples consistent with the invention, and are used to explain the principles of the invention together with the specification.
Fig. 1 is a flowchart of a display control method according to an example.
Fig. 2 is a flowchart of a display control method according to an example shown in Fig. 1.
Fig. 3 is a flowchart of a display control method according to an example shown in Fig. 1.
Fig. 4 is a flowchart of a display control method according to an example.
Fig. 5 is a flowchart of a display control method according to an example shown in Fig. 4.
Fig. 6 is a flowchart of display control method according to another example shown in Fig. 4.
Fig. 7 is a flowchart of display control method according to another example shown in Fig. 4.
Fig. 8 is a block diagram of a display control apparatus according to an example.
Fig. 9 is a block diagram of a display control apparatus according to an example shown in Fig. 8.
Fig. 10 is a block diagram of a display control apparatus according to an example shown in Fig. 8.
Fig. 11 is a block diagram of a display control apparatus according to an example.
Fig. 12 is a block diagram of a display control apparatus according to an example shown in Fig. 11.
Fig. 13 is a block diagram of a display control apparatus according to an example shown in Fig. 11.
Fig. 14 is a block diagram of a display control apparatus according to an example shown in Fig. 11.
Fig. 15 is a block diagram of a display control apparatus according to an example shown in Fig. 11.
Fig. 16 is a block diagram of a vehicle according to an example.
Fig. 17 is a block diagram of a terminal according to an example.

### DETAILED DESCRIPTION OF THE INVENTION

The embodiments will be described in detail, and examples thereof are shown in the accompanying drawings. When the following description relates to the accompanying drawings, unless otherwise indicated, the same numbers in different accompanying drawings refer to the same or similar elements. Embodiments described in the following examples do not represent all possible embodiments consistent with the invention. Rather, they are instances of apparatuses and methods consistent with some aspects of the appended claims of the invention.

It needs to be noted that all actions of obtaining signals, information or data in the present application are performed in compliance with corresponding data protection regulations and policies of the country in which they are located, and with authorization granted by owners of corresponding apparatuses.

There may be scenarios where a user needs to operate the user's smart device (e.g., a mobile phone/ipad) while driving. For example, the user wants to open a certain application on the mobile phone, etc. However, operating the mobile phone/ipad while driving is a dangerous driving behavior. The industry's usual approach to solving this security problem is to project a screen of the mobile phone/ipad onto a center console screen of a car, and then the user views the screen of the car with their eyes.

The invention is applied in a scenario of projecting a terminal screen to a screen of the on-board computer. In the related art, the terminal screen is projected to the screen of the on-board computer for a display through a mirror projection. Usually, a size and resolution of the screen of the on-board computer are very different from those of the terminal screen, and the direct mirror projection will bring the user poor experience of viewing the screen of the on-board computer. In addition, in the related art, before projecting the terminal screen to the screen of the on-board computer, a user needs to manually open a certain application on a terminal first. For example, before that the user wants to open a navigation application on a mobile phone and project an interface of the navigation application to the screen of the on-board computer for display, the user needs to manually open the navigation application on the mobile phone and trigger a relevant projection control on a mobile phone side, and then the terminal screen can be projected to the screen of the on-board computer in the mirror mode. This apparently still needs a manual operation by the user, so there is still an issue of safe driving. In addition, in the related art, after the terminal screen is projected to the screen of the on-board computer, the screen of the on-board computer cannot respond to a trigger operation of the user, and it is still needed for the user to manually swipe or tap the terminal screen, which also affects the safe driving of a vehicle.

To solve the above problems, the invention provides a display control method and apparatus, a vehicle, a terminal, and a storage medium. Specific embodiments of the invention are described in detail below in conjunction with accompanying drawings.

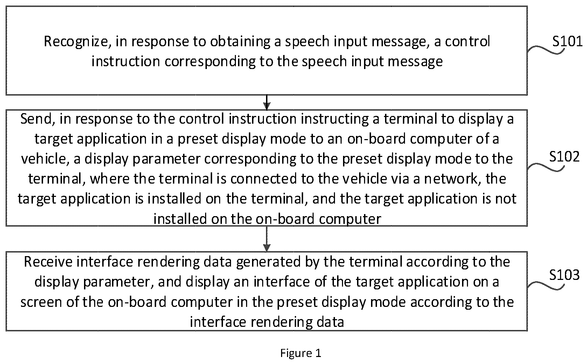

Fig. 1 is a flowchart of a display control method according to an example. The method may be applied to a vehicle. As shown in Fig. 1, the method includes the steps as follows.

In step S101, in response to obtaining a speech input message, a control instruction corresponding to the speech input message is recognized.

The speech input message is a speech interaction request message sent by a user (typically a user in the vehicle, such as a driver), and the speech interaction request message may be captured by the vehicle through a microphone. The speech input message may include a speech request message for controlling a terminal (e.g., the speech input message may be "Please open the navigation application on the mobile phone" or "Display the navigation application on the mobile phone in full screen"). The terminal (e.g. a mobile phone or an ipad) is a terminal that has established a network connection with the vehicle. For example, the terminal is on the same local area network (e.g. WIFI, StarFlash, etc.) as the vehicle.

After a smart speech assistant function on the vehicle is turned on, the speech input message of the user may be received, and an audio response is performed on the speech input message so as to realize a speech interaction with the user. In addition, the terminal establishes the network connection with the vehicle, and the speech input message may also be captured by the terminal. The captured speech input message may be sent to a server by the terminal, so that the server determines the control instruction by performing instruction recognition on the speech input message.

In addition, in a practical application scenario, the speech input message may also be a speech request message of the user for controlling the vehicle (e.g., the speech input message may be "Please turn on the air conditioner" or "Please adjust the cab temperature to 20 degrees Celsius"). In this case, there is no need to control a terminal screen to be projected for a display on a screen of the on-board computer. Thus, in the invention, the control instruction corresponding to the speech input message may be recognized. In a case of determining that the control instruction is a control instruction that instructs the terminal to display a target application in a preset display mode to an on-board computer of the vehicle, a display parameter corresponding to the preset display mode may be sent to the terminal, so as to control an interface of the target application on the terminal to be displayed on the screen of on-board computer in accordance with the preset display mode. In a case of determining that the control instruction is a control instruction to the vehicle itself, there is no need to send the display parameter to the terminal.

In an example, the speech input message may be sent to the server by the vehicle to enable the server to determine the control instruction by performing semantic recognition on the speech input message. The control instruction sent by the server is received by the vehicle.

The server may perform speech recognition (e.g., automatic speech recognition (ASR)) on the speech input message, convert the speech input message from audio to text data, and then input the text data into a natural language processing model, enabling to obtain semantic information corresponding to the speech input message through parsing. In this way, the server may recognize the control instruction corresponding to the speech input message, and the type of the control instruction according to the semantic information. The type of the control instruction may include a first instruction for controlling the terminal and a second instruction for controlling the vehicle.

In another example, the control instruction corresponding to the speech input message may be determined by the vehicle through a preset instruction correspondence. The preset instruction correspondence may include a plurality of preset control instructions, and one or more speech information corresponding to each control instruction respectively.

In yet another example, the speech input message may further be input into a pre-trained instruction recognition macromodel by the vehicle, and the control instruction is output through the instruction recognition macromodel. The instruction recognition macromodel may be a deep learning macromodel obtained by pre-training according to a preset corpus, and a model structure, model parameters, and a training process of the macromodel are not specifically limited by the invention.

In step S102, in response to the control instruction instructing the terminal to display the target application in the preset display mode to the on-board computer of the vehicle, the display parameter corresponding to the preset display mode is sent to the terminal. The terminal is connected to the vehicle via a network, the target application is installed on the terminal, and the target application is not installed on the on-board computer.

The target application refers to a terminal application (e.g. a navigation application, a music application, etc.) that the user wants to open or project for a display on the screen of the on-board computer. In addition, in the invention, the target application may not be installed on an on-board computer side, and the target application usually refers to an application on the terminal that supports a secondary screen projection function.

The display parameter here may include parameters such as a resolution and size of the screen of the on-board computer (e.g., a center console screen of the vehicle). Different preset display modes correspond to different display parameters. The preset display mode may include a first mode for a full screen display on the screen of the on-board computer, or a second mode for a display in a preset area of the screen of the on-board computer. The user may preset a target display mode from the plurality of preset display modes as needed, and then the interface of the target application on the terminal may be displayed on the screen of the on-board computer in accordance with the target display mode. In the invention, the screen of the on-board computer may be considered as a secondary screen of the terminal.

If the preset display mode is the first mode, a size and resolution of the entire screen of the on-board computer may be sent to the terminal by the vehicle, so that the terminal may display the interface of the target application in full screen on the screen of the on-board computer by performing a user interface (UI) design according to the size and resolution of the entire screen of the on-board computer.

If the preset display mode is the second mode, a size and resolution corresponding to the preset area on the screen of the on-board computer may be sent to the terminal by the vehicle, so that the terminal may display the interface of the target application in the preset area of the screen of the on-board computer by performing a UI design according to the size and resolution of the preset area on the screen of the on-board computer.

It needs to be noted that in the invention, in the case where the preset display mode includes the second mode, the interface of the target application may be displayed in the preset area of the screen of the on-board computer according to interface rendering data, and a first preset interface is displayed in other areas of the screen of the on-board computer. The first preset interface includes a black screen or an application icon of the on-board computer, and the other areas are areas on the screen of the on-board computer other than the preset area. For example, the other areas may be preset edge areas on the screen of the on-board computer, the preset edge areas may be edge areas that surround the screen in a circumference, or may be edge areas located on one side of the screen. Width of the preset edge areas may be preset widths which may correspond to distances between boundaries of the preset areas and a boundary of the screen of the on-board computer.

That is, the invention, in addition to supporting a full screen display of the interface of the target application on the screen of the on-board computer, may further support a projection display of the interface of the target application on the preset area of the screen of the on-board computer. The preset area may include a partial area of the screen of the on-board computer. In addition, the first preset interface may further be displayed in the preset edge area by the on-board computer. The first preset interface may be a black screen or an application icon of an application installed on the on-board computer, so that the user may operate the vehicle accordingly through the application icon while viewing a projection interface of the terminal on the screen of the on-board computer.

It further needs to be noted that the speech input message typically may include a name of the target application when the user wants to open or display the target application on the terminal in full screen. Thus, identification information of the target application may further be obtained by the vehicle on the basis of the speech input message. In this way, the vehicle, while sending the display parameter to the terminal, may further send the identification information of the target application to the terminal, so that the terminal may determine, on the basis of the identification information, the target application that needs a projection display on the screen of the on-board computer. Afterwards, the terminal may use the target application, utilize the secondary screen projection function provided by a terminal system, take the screen of the on-board computer of the vehicle as the secondary screen of the terminal, generate the interface rendering data by performing the UI design on the screen of the on-board computer of the vehicle according to the display parameter of the screen of the on-board computer sent by the vehicle, and send the interface rendering data to the vehicle.

In addition, in a process of determining the identification information of the target application from the speech input message, speech recognition and natural language processing need to be performed on the speech input message. The process relates to more complex model calculations, and the arithmetic power of the on-board computer is limited. Thus, in an example, the speech input message may be sent to the server, and sent to the vehicle after the identification information of the target application is obtained by the server.

In step S103, the interface rendering data generated by the terminal according to the display parameter is received, and the interface of the target application is displayed on the screen of the on-board computer in the preset display mode according to the interface rendering data.

In the step, the vehicle may realize displaying the interface of the target application on the screen of the on-board computer in the preset display mode after rendering the screen of the on-board computer on the basis of the interface rendering data. Different target applications typically have different interfaces.

In the above method, the control instruction corresponding to the speech input message may be recognized after the vehicle receives the speech input message sent by the user, and in the case of determining that the control instruction instructs the terminal to display the target application in the preset display mode to the on-board computer of the vehicle, the interface rendering data generated by the terminal according to the display parameter is received by sending the display parameter corresponding to the preset display mode to the terminal. In this way, the vehicle may display the interface of the target application on the terminal in the preset display mode on the screen of the on-board computer according to the interface rendering data, and the interface of the target application displayed in the preset display mode (e.g., the full screen display or the display in the preset area of the screen of the on-board computer) is adapted to the screen of the on-board computer, which avoids merely being able to project the interface of the target application on the terminal to the screen of the on-board computer in a mirror mode and improves user experience. In addition, the user may realize that the interface of the target application on the terminal is displayed on the screen of the on-board computer through the speech input message, avoiding a manual operation to the terminal screen, and improving the safety of vehicle driving.

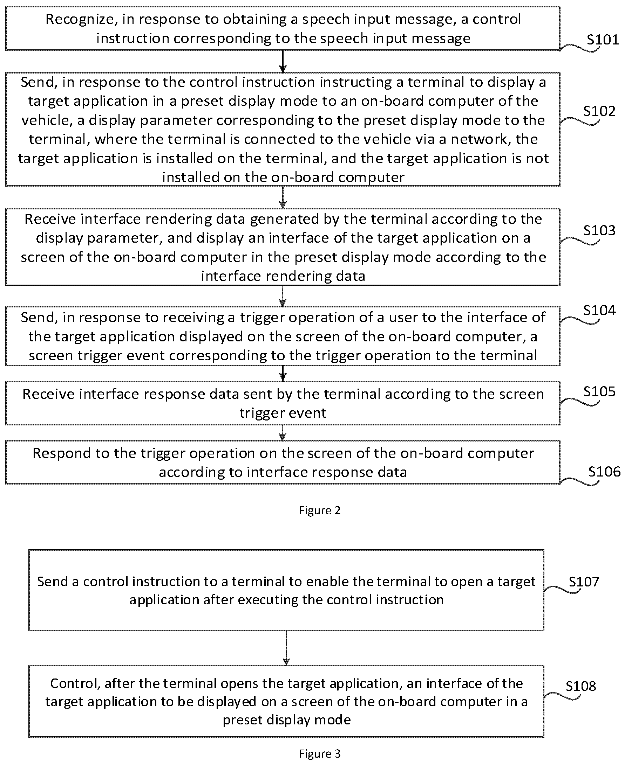

Fig. 2 is a flowchart of a display control method according to another example shown in Fig. 1. As shown in Fig. 2, the method further includes the steps as follows.

In step S104, in response to receiving a trigger operation of a user to the interface of the target application displayed on the screen of the on-board computer, a screen trigger event corresponding to the trigger operation is sent to the terminal.

In the invention, after the interface of the target application is projected to be displayed on the screen of the on-board computer, the user may further perform trigger operations such as swiping, tapping, etc. on the interface of the target application displayed on the screen of the on-board computer, which avoids a traditional problem that a trigger operation may be performed on the target application displayed on the terminal screen merely on a terminal side.

After obtaining the trigger operation, the on-board computer may generate the screen trigger event corresponding to the trigger operation, and the screen trigger event may include screen position information about a tap or swipe of the user. Afterwards, the screen trigger event may be sent to the terminal to enable the terminal to generate interface response data after responding to the screen trigger event.

After obtaining the screen trigger event, the terminal may re-perform a UI design on the screen of the on-board computer and then generate the interface response data on the basis of the screen position information about the tap or swipe of the user carried in the screen trigger event, as well as information such as a screen control corresponding to the screen position information, and on the basis of the secondary screen projection function provided by the terminal system.

In step S105, the interface response data sent by the terminal according to the screen trigger event is received.

In step S106, the trigger operation is responded to on the screen of the on-board computer according to the interface response data.

The vehicle may realize responding to the trigger operation of the user on the screen of the on-board computer by re-performing interface rendering on the screen of the on-board computer on the basis of the received interface response data, which avoids a behavior that the user performs the trigger operation on the terminal side to affect the driving safety of the vehicle.

Fig. 3 is a flowchart of a display control method according to an example shown in Fig. 1. As shown in Fig. 3, the method further includes the steps as follows.

In step S107, the control instruction is sent to the terminal to enable the terminal to open the target application after executing the control instruction.

In another example of the invention, the control instruction may further include a control instruction instructing the terminal to open the target application. For example, the speech input message is "Open the navigation application on the mobile phone". After instruction recognition is performed on the speech input message, it may be determined that the control instruction is a control instruction for controlling the terminal to open the navigation application (an example of the target application). At this point, the control instruction may be sent to the terminal by the vehicle to enable the terminal to open the target application after executing the control instruction.

In this way, the user may realize the opening of the target application on the terminal through a speech control in the process of driving, without manually operating the terminal, which may also improve the driving safety.

As shown in Fig. 3, the method may further include the steps as follows.

In step S108, after the terminal opens the target application, the interface of the target application is controlled to be displayed on the screen of the on-board computer in the preset display mode.

In another possible example of the invention, the vehicle, after determining that the target application is opened by the terminal, may control the UI interface of the target application to be displayed on the screen of the on-board computer in accordance with the preset display mode, so that the user may view the UI interface of the target application on the screen of the on-board computer. Controlling the UI interface of the target application to be projected for a display on the screen of the on-board computer in accordance with the preset display mode may refer to the description above, which will not be repeatedly described.

It further needs to be noted that the vehicle may also capture a request message for closing a projection that is input by the user (e.g., the user says "close the projection" or "back to mirror projection from full screen projection"). At this point, the vehicle may control the screen of the on-board computer to stop the projection display of the terminal interface, or control the screen of the on-board computer to return from the full screen projection to the mirror projection. In addition, the vehicle may generate a corresponding projection exit instruction on the basis of the request message for closing the projection, and send the projection exit instruction to the terminal, so that the terminal may stop performing the UI design on the screen of the on-board computer of the vehicle.

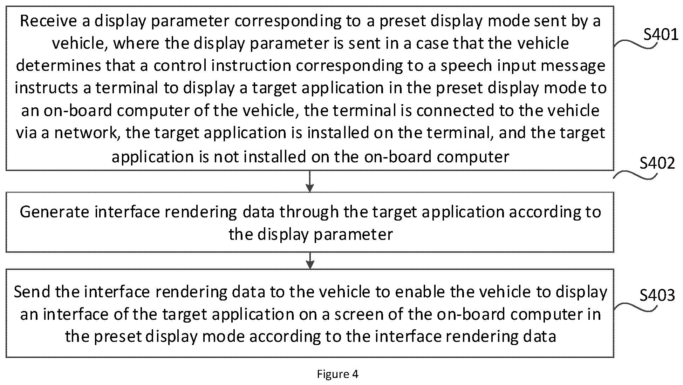

Fig. 4 is a flowchart of a display control method according to an example. The display control method is applied to a terminal. The terminal is a terminal that has established a network connection with a vehicle. For example, the terminal may be a terminal that is connected to the same WIFI network as the vehicle. As shown in Fig. 4, the method includes the steps as follows.

In step S401, a display parameter corresponding to a preset display mode sent by the vehicle is received. The display parameter is sent in a case that the vehicle determines that a control instruction corresponding to a speech input message instructs the terminal to display a target application in the preset display mode to an on-board computer of the vehicle. The terminal is connected to the vehicle via a network, the target application is installed on the terminal, and the target application is not installed on the on-board computer.

The speech input message is a speech interaction request message sent by a user (typically a user in the vehicle, such as a driver), and the speech interaction request message may be captured by the vehicle through a microphone. The speech input message may include a speech request message for controlling the terminal. For example, the speech input message may be "Please open the navigation application on the mobile phone" or "Display the navigation application on the mobile phone in full screen"). The speech input message may also be "full screen display". The terminal (e.g. a mobile phone or an ipad) is a terminal that has established a network connection with the vehicle, e.g. the terminal is on the same local area network (e.g. WIFI, StarFlash, etc.) as the vehicle.

In addition, the terminal establishes the network connection with the vehicle, and the speech input message may also be captured by the terminal. The captured speech input message may be sent to a server by the terminal, so that the server determines the control instruction by performing instruction recognition on the speech input message.

The target application is a terminal application (e.g. a navigation application, a music application, etc.) that the user wants to open or project and display on a screen of the on-board computer. In addition, in the invention, the target application may not be installed on an on-board computer side, and the target application usually refers to an application on the terminal that supports a secondary screen projection function.

The display parameter here may include parameters such as a resolution and size of the screen of the on-board computer (e.g., a center console screen of the vehicle). Different preset display modes correspond to different display parameters. The preset display mode may include a first mode for a full screen display on the screen of the on-board computer, or a second mode for a display in a preset area of the screen of the on-board computer. The user may preset a target display mode needed by the user from the plurality of preset display modes as needed, and then the interface of the target application on the terminal may be displayed on the screen of the on-board computer in accordance with the target display mode. In the invention, the screen of the on-board computer may be considered as a secondary screen of the terminal.

If the preset display mode is the first mode, a size and resolution of the entire screen of the on-board computer may be sent to the terminal by the vehicle, so that the terminal may display the interface of the target application in full screen on the screen of the on-board computer by performing a user interface (UI) design according to the size and resolution of the entire screen of the on-board computer.

If the preset display mode is the second mode, a size and resolution corresponding to the preset area on the screen of the on-board computer may be sent to the terminal by the vehicle to the terminal, so that the terminal may display the interface of the target application in the preset area of the screen of the on-board computer by performing a UI design according to the size and resolution of the preset area on the screen of the on-board computer.

In step S402, interface rendering data is generated through the target application according to the display parameter.

The interface rendering data may include a position and size of each UI element in the interface of the target application on the screen of the on-board computer.

In a case where the speech input message is a speech request message for controlling the terminal, the speech input message may include identification information of the target application of the terminal to be controlled (e.g., the speech input message may be "Please open the navigation application on the mobile phone" or "Display the navigation application on the mobile phone in full screen"), and the speech input message may also not include the identification information of the target application (e.g., the speech input message may be "full screen display").

In a case where the speech input message includes the identification information of the target application, the identification information of the target application may be sent to the terminal by the vehicle. In this way, the terminal may determine, on the basis of the identification information, the target application that needs a projection display on the screen of the on-board computer. Afterwards, the terminal may, through the target application, utilize the secondary screen projection function provided by a terminal system, take the screen of the on-board computer of the vehicle as the secondary screen of the terminal, generate the interface rendering data by performing the UI design on the screen of the on-board computer of the vehicle according to the display parameter of the screen of the on-board computer sent by the vehicle, and send the interface rendering data to the vehicle.

In addition, in a case where the speech input message does not include the identification information of the target application, the identification information of the target application is not sent to the terminal by the vehicle. In this case, the terminal may take an application displayed in a current interface of the terminal as the target application. The application displayed in the current interface of the terminal is usually a foreground application of the terminal.

In this step, the interface rendering data may be generated by performing the user interface (UI) design on the screen of the on-board computer through the target application according to the display parameter; where different preset display modes correspond to different display parameters.

In an example, according to the resolution and the size, the position and size of each UI element in the interface of the target application on the screen of the on-board computer may be determined by the target application on the basis of the secondary screen projection function provided by the terminal system (e.g., Android).

In step S403, the interface rendering data is sent to the vehicle to enable the vehicle to display the interface of the target application on the screen of the on-board computer in the preset display mode according to the interface rendering data.

In the above method, the control instruction corresponding to the speech input message may be recognized after the vehicle receives the speech input message sent by the user, and in the case of determining that the control instruction instructs the terminal to display the target application in the preset display mode to the on-board computer of the vehicle, the interface rendering data generated by the terminal according to the display parameter is received by sending the display parameter corresponding to the preset display mode to the terminal. In this way, the vehicle may display the interface of the target application on the terminal in the preset display mode on the screen of the on-board computer according to the interface rendering data, and the interface of the target application displayed in the preset display mode (e.g., the full screen display or the display in the preset area of the screen of the on-board computer) is adapted to the screen of the on-board computer, which avoids merely being able to project the interface of the target application on the terminal to the screen of the on-board computer in a mirror mode and improves user experience. In addition, the user may realize that the interface of the target application on the terminal is displayed on the screen of the on-board computer through the speech input message, avoiding a manual operation to the terminal screen and improving the safety of vehicle driving.

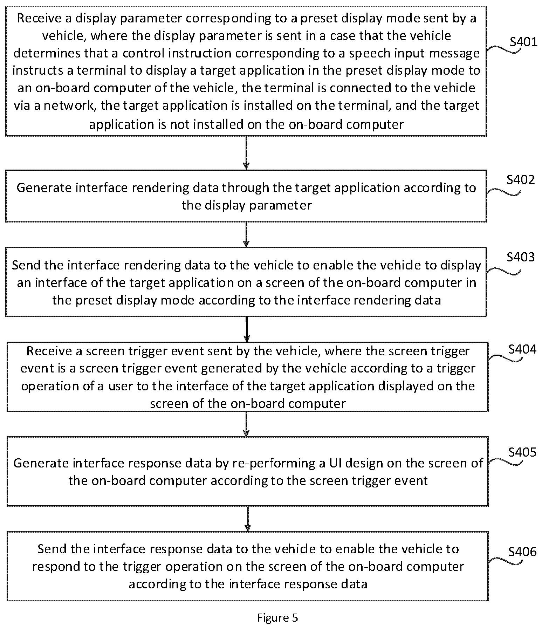

Fig. 5 is a flowchart of a display control method according to an example shown in Fig. 4. As shown in Fig. 5, the method further includes the steps as follows.

In step S404, a screen trigger event sent by the vehicle is received. The screen trigger event is a screen trigger event generated by the vehicle according to a trigger operation of a user to the interface of the target application displayed on the screen of the on-board computer.

In the invention, after the user interface of the target application on the terminal is projected to be displayed on the screen of the on-board computer of the vehicle, the user may further perform trigger operations such as swiping, tapping, etc. on the interface of the target application displayed on the screen of the on-board computer, which avoids a traditional problem that a trigger operation may be performed on the target application displayed on the terminal screen merely on a terminal side.

After obtaining the trigger operation, the on-board computer may generate the screen trigger event corresponding to the trigger operation, and send the screen trigger event to the terminal. The screen trigger event may include screen position information about a tap or swipe of the user.

In step S405, interface response data is generated by re-performing a UI design on the screen of the on-board computer according to the screen trigger event.

After obtaining the screen trigger event, the terminal may re-perform a UI design on the screen of the on-board computer and then generate the interface response data on the basis of the screen position information about the tap or swipe of the user carried in the screen trigger event, as well as information such as a screen control corresponding to the screen position information, and on the basis of the secondary screen projection function provided by the terminal system.

In step S406, the interface response data is sent to the vehicle to enable the vehicle to respond to the trigger operation on the screen of the on-board computer according to the interface response data.

The vehicle may realize responding to the trigger operation of the user on the screen of the on-board computer by re-performing interface rendering on the screen of the on-board computer on the basis of the received interface response data, which avoids a behavior that the user performs the trigger operation on the terminal side to affect the driving safety of the vehicle.

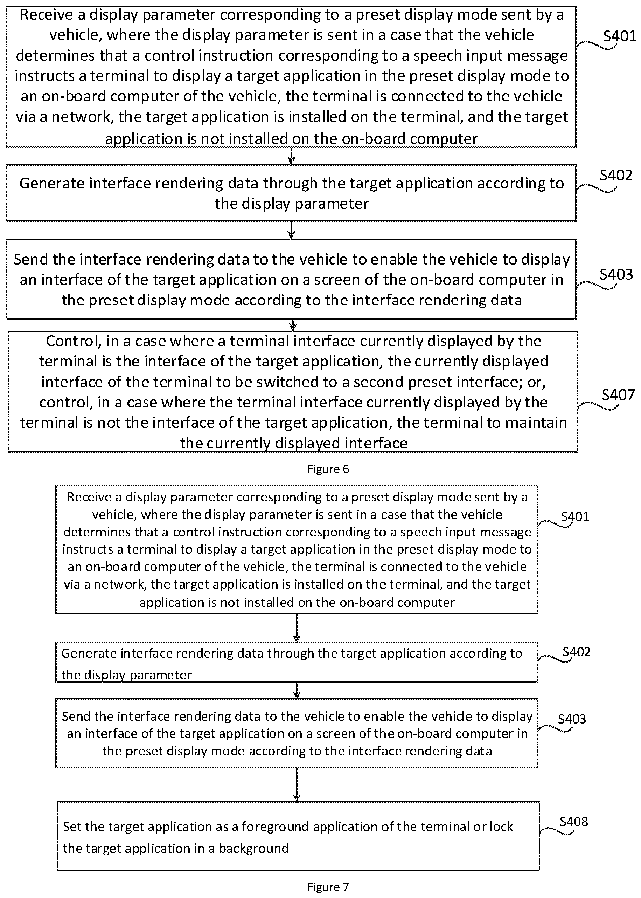

Fig. 6 is a flowchart of a display control method according to another example shown in Fig. 4. As shown in Fig. 6, the method further includes the steps as follows.

In step S407, in a case where a terminal interface currently displayed by the terminal is the interface of the target application, the currently displayed interface of the terminal is controlled to be switched to a second preset interface; or, in a case where the terminal interface currently displayed by the terminal is not the interface of the target application, the terminal is controlled to maintain the currently displayed interface.

In the case where the interface of the target application is controlled to be displayed on the screen of the on-board computer of the vehicle in accordance with a preset display mode (e.g., full screen display), in consideration of the fact that UI designs of the target application on the terminal screen and the screen of the on-board computer are different (the reason is in that the display parameter of a terminal plane is different from that of the screen of the on-board computer). As a result, the UI interface of the target application cannot usually be displayed on the terminal screen and the screen of the on-board computer at the same time. Thus, in this step, in a case where the terminal interface currently displayed by the terminal is the interface of the target application, the currently displayed interface of the terminal may be controlled to be switched to a second preset interface (e.g., a desktop). In a case of determining that the terminal interface currently displayed by the terminal is not the interface of the target application, the terminal may be controlled to maintain the currently displayed interface unchanged, and thus terminal use experience of the user may be improved.

Fig. 7 is a flowchart of a display control method according to another example shown in Fig. 4. As shown in Fig. 7, the method may further include the steps as follows.

In step S408, the target application is set as a foreground application of the terminal or the target application is locked in a background.

After the UI interface of the target application is projected to the screen of the on-board computer of the vehicle, if the target application is the foreground application of the terminal, the display interface of the terminal may be controlled to be switched from the UI interface of the target application to the preset interface (e.g. return to the desktop). However, after the display interface of the terminal returns to the desktop from the UI interface of the target application, the terminal system will set the target application as a background application. In addition, for another application scenario, even if the current foreground application of the terminal is not the target application, the terminal, after receiving the control instruction for displaying the interface of the target application on the screen of the on-board computer in accordance with the preset display mode, may also generate the corresponding interface rendering data through the target application and then send it to the vehicle so as to project the interface of the target application to be displayed on the screen of the on-board computer. For the above two scenarios, on the terminal side, the target application belongs to the background application. However, given that even if the target application is in a state of a secondary screen projection, the terminal system will reduce or stop allocating system resources for the target application due to the fact that the target application is a background application. This will affect or make it impossible to continue to project for a display of the UI interface of the target application on the screen of the on-board computer. Thus, in a possible example of the invention, after the UI interface of the target application is displayed on the screen of the on-board computer of the vehicle in accordance with the preset display mode, the terminal may set the target application as the foreground application of the terminal, or lock the target application in the background without being automatically closed, thereby preventing the terminal from taking the target application as a background application to reduce or stop the allocation of system resources for the target application, and ensuring that a subsequent projection state of the secondary screen is normal.

It further needs to be noted that in the invention, the screen of the on-board computer may be considered as a secondary screen of the terminal, and thus the display of the target application on the screen of the on-board computer and the trigger operation of the user on the screen of the on-board computer with respect to the target application are still not affected after the terminal is locked.

As is mentioned above, the vehicle may also capture a request message for closing a projection that is input by the user (e.g., the user says "close the projection" or "full screen projection returns to mirror projection"). At this point, the vehicle may control the screen of the on-board computer to stop the projection display of the terminal interface. In addition, the vehicle may further generate a corresponding projection exit instruction on the basis of the request message for closing the projection, and send the projection exit instruction to the terminal. Thus, the terminal may be controlled to stop performing the UI design on the screen of the on-board computer after receiving the projection exit instruction. Moreover, the terminal may control the UI interface of the target application that is previously displayed in full screen on the screen of the on-board computer to be displayed again on the terminal screen, or, control the UI interface of the target application to be displayed in a mirror mode on the screen of the on-board computer.

In yet another example of the invention, the control instruction sent by the vehicle may further be received by the terminal. Then the terminal is controlled to open the target application according to the control instruction. After the terminal opens the target application, the interface of the target application may be controlled to be displayed on the screen of the on-board computer in the preset display mode.

That is, the control instruction may further include a control instruction instructing the terminal to open the target application. For example, the speech input message is "open the navigation application on the mobile phone". After instruction recognition is performed on the speech input message, it may be determined that the control instruction is a control instruction for controlling the terminal to open the navigation application (an example of the target application). At this point, the control instruction may be sent to the terminal by the vehicle to enable the terminal to open the target application after executing the control instruction. In this way, the user may realize the opening of the target application on the terminal through a speech control in the process of driving, without manually operating the terminal, which may also improve the driving safety.

After opening the target application, the terminal may control the UI interface of the target application to be displayed on the screen of the on-board computer in accordance with the preset display mode, so that the user may view the UI interface of the target application on the screen of the on-board computer. Controlling the UI interface of the target application to be projected for a display on the screen of the on-board computer in accordance with the preset display mode may refer to the description above and will not be described repeatedly here.

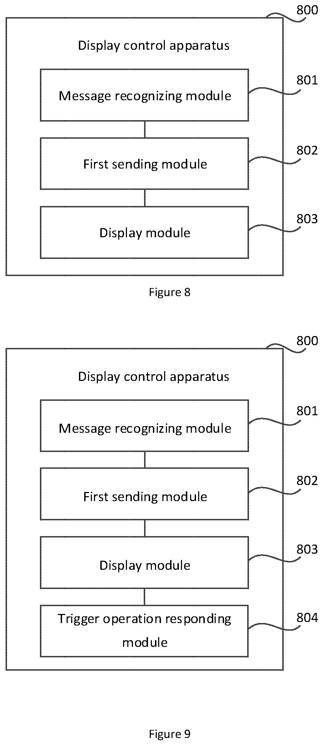

Fig. 8 is a block diagram of a display control apparatus according to an example. The apparatus may be applied to a vehicle. As shown in Fig. 8, the apparatus includes: a message recognizing module 801, configured to recognize, in response to obtaining a speech input message, a control instruction corresponding to the speech input message; a first sending module 802, configured to send, in response to the control instruction instructing a terminal to display a target application in a preset display mode to an on-board computer of the vehicle, a display parameter corresponding to the preset display mode to the terminal, where the terminal is connected to the vehicle via a network, the target application is installed on the terminal, and the target application is not installed on the on-board computer; and a display module 803, configured to receive interface rendering data generated by the terminal according to the display parameter, and display an interface of the target application on a screen of the on-board computer in the preset display mode according to the interface rendering data.

Optionally, the preset display mode includes a first mode for a full screen display on the screen of the on-board computer, or a second mode for a display in a preset area of the screen of the on-board computer. Different preset display modes correspond to different display parameters.

Optionally, in the case where the preset display mode includes the second mode, the interface of the target application is displayed in the preset area of the screen of the on-board computer according to the interface rendering data, and a first preset interface is displayed in other areas of the screen of the on-board computer. The first preset interface includes a black screen or an application icon of the on-board computer, and the other areas are areas on the screen of the on-board computer other than the preset area.

Optionally, Fig. 9 is a block diagram of a display control apparatus according to an example shown in Fig. 8. As shown in Fig. 9, the apparatus further includes: a trigger operation responding module 804, configured to send, in response to receiving a trigger operation of a user to the interface of the target application displayed on the screen of the on-board computer, a screen trigger event corresponding to the trigger operation to the terminal; receive interface response data sent by the terminal according to the screen trigger event; and respond to the trigger operation on the screen of the on-board computer according to the interface response data.

Optionally, the message recognizing module 801 is configured to send the speech input message to a server to enable the server to determine the control instruction by performing semantic recognition on the speech input message; and receive the control instruction sent by the server.

Optionally, the message recognizing module 801 is configured to determine the control instruction corresponding to the speech input message through a preset instruction correspondence.

Optionally, the message recognizing module 801 is configured to output, by inputting the speech input message into a pre-trained instruction recognition macromodel, the control instruction through the instruction recognition macromodel.

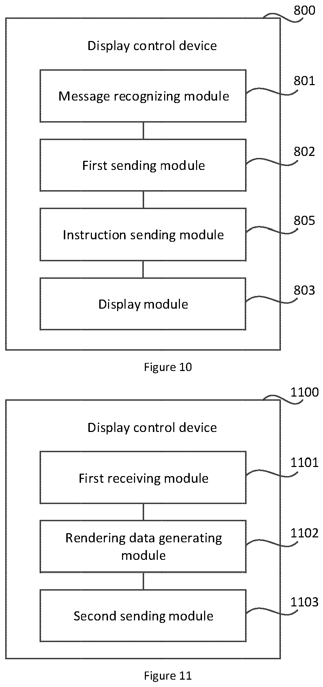

Optionally, the control instruction includes a control instruction instructing the terminal to open the target application. Fig. 10 is a block diagram of a display control apparatus according to an example shown in Fig. 8. As shown in Fig. 10, the apparatus further includes: an instruction sending module 805, configured to send the control instruction to the terminal to enable the terminal to open the target application after executing the control instruction.

Optionally, the display module 803 is configured to control, after the terminal opens the target application, the interface of the target application to be displayed on the screen of the on-board computer in the preset display mode.

Fig. 11 is a block diagram of a display control apparatus according to an example. The apparatus may be applied to a terminal. As shown in Fig. 11, the apparatus includes: a first receiving module 1101, configured to receive a display parameter corresponding to a preset display mode sent by a vehicle, where the display parameter is sent in a case that the vehicle determines that a control instruction corresponding to a speech input message instructs the terminal to display a target application in the preset display mode to an on-board computer of the vehicle, the terminal is connected to the vehicle via a network, the target application is installed on the terminal, and the target application is not installed on the on-board computer; a rendering data generating module 1102, configured to generate interface rendering data through the target application according to the display parameter; and a second sending module 1103, configured to send the interface rendering data to the vehicle to enable the vehicle to display an interface of the target application on a screen of the on-board computer in the preset display mode according to the interface rendering data.

Optionally, the rendering data generating module 1102 is configured to generate the interface rendering data by performing a user interface (UI) design on the screen of the on-board computer through the target application according to the display parameter; where different preset display modes correspond to different display parameters.

Optionally, the display parameter includes a resolution and size of the screen of the on-board computer. The interface rendering data includes a position and size of each UI element in the interface of the target application on the screen of the on-board computer. The rendering data generating module 1102 is configured to determine, according to the resolution and the size, the position and size of each UI element in the interface of the target application on the screen of the on-board computer.

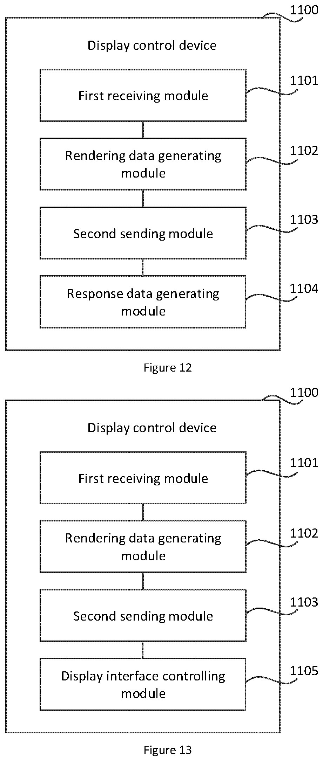

Optionally, Fig. 12 is a block diagram of a display control apparatus according to an example shown in Fig. 11. As shown in Fig. 12, the apparatus further includes: a response data generating module 1104, configured to receive a screen trigger event sent by the vehicle, where the screen trigger event is a screen trigger event generated by the vehicle according to a trigger operation of a user to the interface of the target application displayed on the screen of the on-board computer; generate interface response data by re-performing a UI design on the screen of the on-board computer according to the screen trigger event; and send the interface response data to the vehicle to enable the vehicle to respond to the trigger operation on the screen of the on-board computer according to the interface response data.

Optionally, Fig. 13 is a block diagram of a display control apparatus according to an example shown in Fig. 11. As shown in Fig. 13, the apparatus further includes: a display interface controlling module 1105, configured to control, in a case where a terminal interface currently displayed by the terminal is the interface of the target application, the currently displayed interface of the terminal to be switched to a second preset interface; or, control, in a case where the terminal interface currently displayed by the terminal is not the interface of the target application, the terminal to maintain the currently displayed interface.

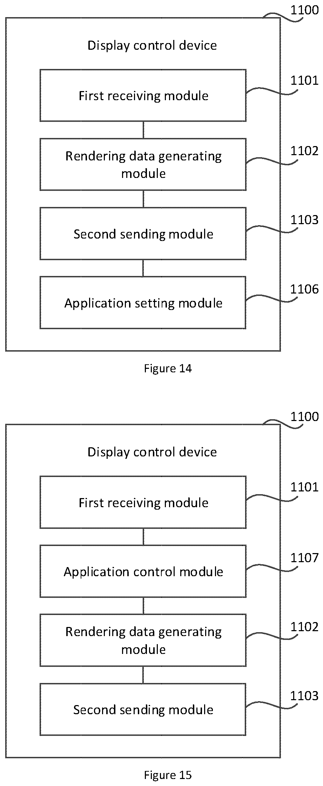

Optionally, Fig. 14 is a block diagram of a display control apparatus according to an example shown in Fig. 11. As shown in Fig. 14, the apparatus further includes: an application setting module 1106, configured to set the target application as a foreground application of the terminal or lock the target application in a background.

Optionally, Fig. 15 is a block diagram of a display control apparatus according to an example shown in Fig. 11. As shown in Fig. 15, the apparatus further includes: an application control module 1107, configured to receive the control instruction sent by the vehicle, and control, according to the control instruction, the terminal to open the target application according to the control instruction; and control, after the terminal opens the target application, the interface of the target application to be displayed on the screen of the on-board computer in the preset display mode.

As for the apparatus in the above example, a specific method in which each module executes operations has been described in detail in the examples about the method, which will not be described in detail here.

The invention further provides a computer readable storage medium, on which computer program instructions are stored. The program instructions, when executed by a processor, implement steps of the display control method provided by the invention.

In another example, a computer program product is further provided. The computer program product contains a computer program executable by a programmable apparatus. The computer program has a code part which is configured to, when executed by the programmable apparatus, execute the above display control method.

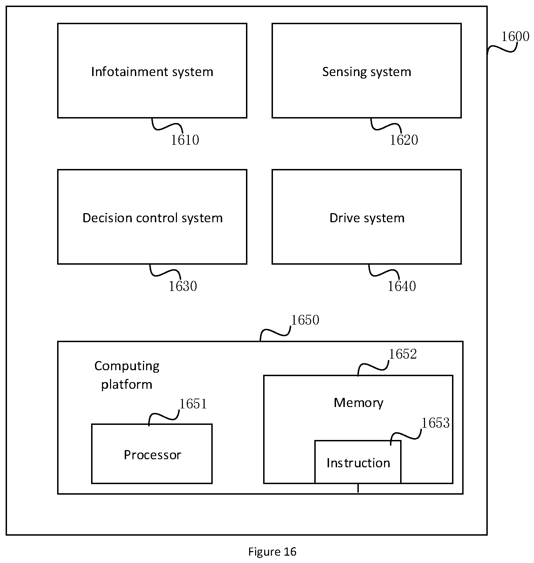

Fig. 16 is a block diagram of a vehicle according to an example. For example, the vehicle 1600 may be a hybrid vehicle, a non-hybrid vehicle, an electric vehicle, a fuel cell vehicle, or other type of vehicle. The vehicle 1600 may be an autonomous vehicle, a semi-autonomous vehicle or a non-autonomous vehicle.

Referring to Fig. 16, the vehicle 1600 may include various subsystems, (e.g., an infotainment system 1610, a sensing system 1620, a decision control system 1630, a drive system 1640, and a computing platform 1650). The vehicle 1600 may also include more or fewer subsystems, and each subsystem may include a plurality of parts. In addition, interconnection may be achieved between each subsystem and between each part of the vehicle 1600 by wired or wireless means.

In some examples, the infotainment system 1610 may include a communication system, an entertainment system, a navigation system, etc.

The sensing system 1620 may include several kinds of sensors for sensing information about an environment surrounding the vehicle 1600. For example, the sensing system 1620 may include a global positioning system (the global positioning system may be a GPS system, a Beidou system, or other positioning systems), an inertial measurement unit (IMU), a lidar, a millimeter wave radar, an ultrasonic radar, and a camera apparatus.

The decision control system 1630 may include a computing system, an overall vehicle controller, a steering system, a throttle, and a braking system.

The drive system 1640 may include a component that provides powered movement for the vehicle 1600. In an example, the drive system 1640 may include an engine, an energy source, a transmission system, and wheels. The engine may be a combination of one or more of an internal combustion engine, an electric motor, or an air compression engine. The engine can convert energy provided by the energy source into mechanical energy.

Part of or all of functions of the vehicle 1600 are controlled by the computing platform 1650. The computing platform 1650 may include at least one processor 1651 and a memory 1652, and the processor 1651 may execute instructions 1653 stored in the memory 1652.

The processor 1651 may be any conventional processor, such as a commercially available CPU. The processors may also include, such as a graphic process units (GPU), a field programmable gate array (FPGA), a system on chip (SOC), an application specific integrated circuit (ASIC), or a combination of them.

The memory 1652 may be implemented by any type of volatile or nonvolatile storage device or their combination, such as a static random access memory (SRAM), an electrically erasable programmable read only memory (EEPROM), an erasable programmable read only memory (EPROM), a programmable read only memory (PROM), a read only memory (ROM), a magnetic memory, a flash memory, a magnetic disk or an optical disk.

In addition to the instructions 1653, the memory 1652 may also store data, such as road maps, route information, a position, direction, speed, and other data of the vehicle. The data stored in the memory 1652 may be used by the computing platform 1650.

In the examples of the invention, the processor 1651 may execute the instructions 1653 to complete all or part of the steps of the display control method above.

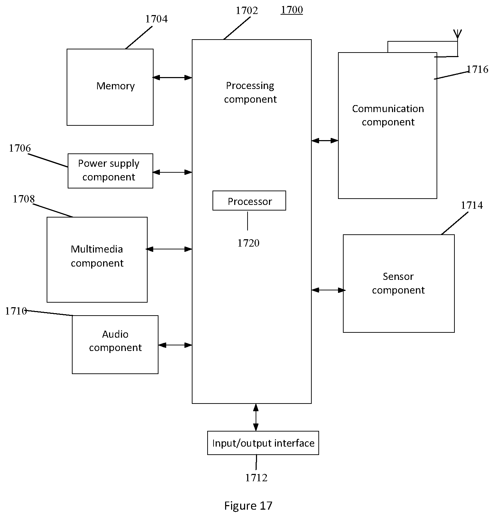

Fig. 17 is a block diagram of a terminal according to an example. For example, the terminal 1700 may be a mobile phone, a computer, a digital broadcast terminal, a messaging device, a game console, a tablet device, a medical device, a fitness device, a personal digital assistant, etc.

Referring to Fig. 17, the terminal 1700 may include one or more of the following components: a processing component 1702, a memory 1704, a power supply component 1706, a multimedia component 1708, an audio component 1710, an input/output interface 1712, a sensor component 1714, and a communication component 1716.

The processing component 1702 typically controls an overall operation of the terminal 1700, such as operations associated with display, a telephone call, a data communication, a camera operation, and a record operation. The processing component 1702 may include one or more processors 1720 to execute instructions to complete all or part of the steps of the above method. In addition, the processing component 1702 may include one or more modules to facilitate interaction between the processing component 1702 and other components. For example, the processing component 1702 may include a multimedia module to facilitate interaction between the multimedia component 1708 and the processing component 1702.

The memory 1704 is configured to store various types of data to support operations on the terminal 1700. Examples of these data include instructions for any application or method operating on the terminal 1700, contact data, phonebook data, messages, pictures, videos, etc. The memory 1704 may be implemented by any type of volatile or nonvolatile storage device or their combination, such as a static random access memory (SRAM), an electrically erasable programmable read only memory (EEPROM), an erasable programmable read only memory (EPROM), a programmable read only memory (PROM), a read only memory (ROM), a magnetic memory, a flash memory, a magnetic disk or an optical disk.

The power supply component 1706 provides power for various components of the terminal 1700. The power supply component 1706 may include a power management system, one or more power sources and other components associated with generating, managing and distributing power for the terminal 1700.

The multimedia component 1708 includes a screen providing an output interface between the terminal 1700 and a user. In some examples, the screen may include a liquid crystal display (LCD) and a touch panel (TP). If the screen includes the touch panel, the screen may be implemented as a touch screen to receive an input signal from the user. The touch panel includes one or more touch sensors to sense a touch, sliding and gestures on the touch panel. The touch sensor can not only sense the boundary of the touch or sliding operation, but also detect the duration and pressure related to the touch or sliding operation. In some examples, the multimedia component 1708 includes one front camera and/or one rear camera. When the terminal 1700 is in an operation mode, such as a shooting mode or a video mode, the front camera and/or the rear camera can receive external multimedia data. Each front camera and rear camera may be a fixed optical lens system or have a focal length and optical zoom capability.

The audio component 1710 is configured to output and/or input audio signals. For example, the audio component 1710 includes a microphone (MIC) configured to receive an external audio signal when the terminal 1700 is in the operation mode, such as a call mode, a record mode, and a speech recognition mode. The received audio signal may be further stored in the memory 1704 or transmitted via the communication component 1716. In some examples, the audio component 1710 also includes a speaker for outputting an audio signal.

The input/output interface 1712 provides an interface between the processing component 1702 and a peripheral interface module which may be a keyboard, a click wheel, buttons, etc. These buttons may include but are not limited to: a home button, a volume button, a start button and a lock button.

The sensor component 1714 includes one or more sensors for providing state evaluation in various aspects for the terminal 1700. For example, the sensor component 1714 may detect an open/closed state of the terminal 1700 and the relative positioning of the components. For example, the component is a display and a keypad of the terminal 1700. The sensor component 1714 may also detect a change in the position of the terminal 1700 or a component of the terminal 1700, the presence or absence of contact between the user and the terminal 1700, the orientation or acceleration/deceleration of the terminal 1700 and the temperature change of the terminal 1700. The sensor component 1714 may include a proximity sensor configured to detect the presence of nearby objects without any physical contact. The sensor component 1714 may further include an optical sensor, such as a CMOS or CCD image sensor, for use in imaging applications. In some examples, the sensor component 1714 may further include an acceleration sensor, a gyroscope sensor, a magnetic sensor, a pressure sensor, or a temperature sensor.

The communication component 1716 is configured to facilitate wired or wireless communications between the terminal 1700 and other devices. The terminal 1700 may access a wireless network based on a communication standard, such as Wi-Fi, 2G or 3G, or their combination. In an example, the communication component 1716 receives a broadcast signal or broadcast-related information from an external broadcast management system via a broadcast channel. In an example, the communication component 1716 further includes a near field communication (NFC) module to facilitate short-range communication. For example, the NFC module may be implemented based on a radio frequency identification (RFID) technology, an infrared data association (IrDA) technology, an ultra wide band (UWB) technology, a Bluetooth (BT) technology and other technologies.

In an example, the terminal 1700 may be implemented by one or more application-specific integrated circuits (ASIC), digital signal processors (DSP), digital signal processing devices (DSPD), programmable logic devices (PLD), field programmable gate arrays (FPGA), controllers, microcontrollers, microprocessors, or other electronic elements for performing the above method.

In an example, a non-temporary computer-readable storage medium including instructions (e.g., the memory 1704 including instructions) is further provided. The above instructions may be executed by the processor 1720 of the terminal 1700 to complete the above method. For example, the non-temporary computer-readable storage medium may be an ROM, a random access memory (RAM), a CD-ROM, a magnetic tape, a floppy disk, and an optical data storage device, etc.

Other examples of the invention will be apparent to those skilled in the art after considering the specification and practice of the invention. The present application is intended to cover any variation, use, or adaptation of the invention that follows the general principles of the invention and includes common knowledge or customary technical means in the technical field that are not disclosed herein. The specification and examples are to be considered as examples merely.

It is to be understood that the invention is not limited to the exact structure that has been described above and illustrated in the accompanying drawings, and that various modifications and changes may be made without departing from its scope, which is defined by the appended claims.

## Claims

1. A display control method, applied to a vehicle, comprising:
recognizing (S101), in response to obtaining a speech input message, a control instruction corresponding to the speech input message;
sending (S102), in response to the control instruction instructing a terminal to display a target application in a preset display mode to an on-board computer of the vehicle, a display parameter corresponding to the preset display mode to the terminal, wherein the terminal is connected to the vehicle via a network, the target application is installed on the terminal, and the target application is not installed on the on-board computer; and
receiving (S103) interface rendering data generated by the terminal according to the display parameter, and displaying (S103) an interface of the target application on a screen of the on-board computer in the preset display mode according to the interface rendering data.

2. The method according to claim 1, wherein the preset display mode comprises a first mode for a full screen display on the screen of the on-board computer, or a second mode for a display in a preset area of the screen of the on-board computer, and different preset display modes correspond to different display parameters.

3. The method according to claim 2, wherein in the case where the preset display mode comprises the second mode, displaying the interface of the target application in the preset area of the screen of the on-board computer according to the interface rendering data, displaying a first preset interface in other areas of the screen of the on-board computer, wherein the first preset interface comprises a black screen or an application icon of the on-board computer, and the other areas are areas on the screen of the on-board computer other than the preset area.

4. The method according to any one of claims 1-3, further comprising:
sending (S104), in response to receiving a trigger operation of a user to the interface of the target application displayed on the screen of the on-board computer, a screen trigger event corresponding to the trigger operation to the terminal;
receiving (S105) interface response data sent by the terminal according to the screen trigger event; and
responding (S106) to the trigger operation on the screen of the on-board computer according to the interface response data.

5. The method according to claim 1, wherein recognizing (S101) the control instruction corresponding to the speech input message comprises at least one of:
sending the speech input message to a server to enable the server to determine the control instruction by performing semantic recognition on the speech input message, and receiving the control instruction sent by the server;
determining the control instruction corresponding to the speech input message through a preset instruction correspondence; or
outputting, by inputting the speech input message into a pre-trained instruction recognition macromodel, the control instruction through the instruction recognition macromodel.

6. The method according to claim 1, wherein the control instruction comprises a control instruction instructing the terminal to open the target application; and the method further comprises:
sending (S107) the control instruction to the terminal to enable the terminal to open the target application after executing the control instruction.

7. The method according to claim 6, further comprising:
controlling (S108), after the terminal opens the target application, the interface of the target application to be displayed on the screen of the on-board computer in the preset display mode.

8. A display control method, applied to a terminal, comprising:
receiving (S401) a display parameter corresponding to a preset display mode sent by a vehicle, wherein the display parameter is sent in a case that the vehicle determines that a control instruction corresponding to a speech input message instructs the terminal to display a target application in the preset display mode to an on-board computer of the vehicle, the terminal is connected to the vehicle via a network, the target application is installed on the terminal, and the target application is not installed on the on-board computer;
generating (S402) interface rendering data through the target application according to the display parameter; and
sending (S403) the interface rendering data to the vehicle to enable the vehicle to display an interface of the target application on a screen of the on-board computer in the preset display mode according to the interface rendering data.

9. The method according to claim 8, wherein generating (S402) the interface rendering data through the target application according to the display parameter comprises:
generating the interface rendering data by performing a user interface (UI) design on the screen of the on-board computer through the target application according to the display parameter;
wherein different preset display modes correspond to different display parameters.

10. The method according to claim 9, wherein the display parameter comprises a resolution and size of the screen of the on-board computer and the interface rendering data comprises a position and size of each UI element in the interface of the target application on the screen of the on-board computer; and
wherein generating the interface rendering data by performing the UI design on the screen of the on-board computer through the target application according to the display parameter comprises:
determining, according to the resolution and the size, the position and the size of each UI element in the interface of the target application on the screen of the on-board computer.

11. The method according to any one of claims 8-10, further comprising:
receiving (S404) a screen trigger event sent by the vehicle, wherein the screen trigger event is a screen trigger event generated by the vehicle according to a trigger operation of a user to the interface of the target application displayed on the screen of the on-board computer;
generating (S405) interface response data by re-performing a UI design on the screen of the on-board computer according to the screen trigger event; and
sending (S406) the interface response data to the vehicle to enable the vehicle to respond to the trigger operation on the screen of the on-board computer according to the interface response data.

12. The method according to claim 8, further comprising at least one of:
controlling (S407), in a case where a terminal interface currently displayed by the terminal is the interface of the target application, the currently displayed interface of the terminal to be switched to a second preset interface;
controlling (S407), in a case where a terminal interface currently displayed by the terminal is not the interface of the target application, the terminal to maintain the currently displayed interface;
setting (S408) the target application as a foreground application of the terminal or locking the target application in a background; or
receiving the control instruction sent by the vehicle, controlling, according to the control instruction, the terminal to open the target application, and controlling, after the terminal opens the target application, the interface of the target application to be displayed on the screen of the on-board computer in the preset display mode.

13. A vehicle (1600), comprising:
a processor (1651); and
a memory (1652) configured to store processor-executable instructions;
wherein the processor (1651) is configured to execute the steps of the method according to any one of claims 1-7.

14. A terminal (1700), comprising:
a processor (1720); and
a memory (1704) configured to store processor-executable instructions;
wherein the processor (1720) is configured to execute the steps of the method according to any one of claims 8-12.

15. A computer readable storage medium, storing computer program instructions thereon, wherein the program instructions, when being executed by a processor (1651, 1720), implement the steps of the method according to any one of claims 1-7 or 8-12.
